# EUROPÄISCHE PATENTSCHRIFT

(11) **EP 2 449 302 B1**
(45) Veröffentlichungstag und Bekanntmachung des Hinweises auf die Patenterteilung: **04.11.2015**
(21) Anmeldenummer: 10707449.4
(22) Anmeldetag: 18.02.2010
(51) Int. Cl.: F16K 31/54, F16L 25/01, F16L 35/00, F16L 37/098, F16L 37/36, F16L 37/56, H01R 13/639, H01R 13/64, F16K 31/528, F16L 37/12, F16L 37/373

(54) **KUPPLUNGSANORDNUNG**
COUPLING ARRANGEMENT
AGENCEMENT D'ACCOUPLEMENT

(30) Priorität: 14.03.2009 DE 202009003650 U
(43) Veröffentlichungstag der Anmeldung: 09.05.2012
(60) Teilanmeldung: 11007296.4
(73) Patentinhaber: H&B Electronic Gmbh&Co. Kg, 75392 Deckenpfronn (DE)
(72) Erfinder: BAYERBACH, Jan, D-75365 Calw (DE); HEIMSCH, Jochen, D-70734 Fellbach (DE); HÖLZLE, Dieter, D-75392 Deckenpfronn (DE); WEBER, Wilfried, D-72296 Schopfloch (DE)
(74) Vertreter: Wacker, Jost Oliver
(86) Internationale Anmeldenummer: PCT/EP2010/000999
(87) Internationale Veröffentlichungsnummer: WO 2010/105722

(56) Entgegenhaltungen:
- EP-A2- 1 148 286
- WO-A1-2006/131139
- WO-A1-2007/147510
- DE-A1-102004 033 567
- US-A- 2 334 875
- US-A- 2 397 576
- US-A- 2 399 515
- US-A- 2 712 454
- US-A- 3 167 092
- US-A- 3 964 511
- US-A1- 2008 286 986

## Beschreibung

Die Erfindung betrifft eine Kupplungsanordnung zur lösbaren tropffreien Verbindung eines an einer ersten Einheit vorgesehenen ersten Leitungsabschnittes mit einem an einer zweiten Einheit vorgesehenen zweiten Leitungsabschnitt nach dem Oberbegriff des Anspruchs 1. Die Kupplungsanordnung sieht hierzu an der ersten Einheit anbringbare Verbindungsmittel und an der zweiten Einheit anbringbare Verbindungsgegenmittel vor, wobei die Verbindungsgegenmittel an den Verbindungsmitteln direkt oder indirekt festlegbar sind. Ferner weist die Kupplungsanordnung eine Stelleinrichtung auf, die zwischen dem ersten Leitungsabschnitt und dem zweiten Leitungsabschnitt positionierbar ist. Die Stelleinrichtung ist dabei zwischen einer Sperrstellung, in der die Verbindung zwischen dem ersten Leitungsabschnitt und dem zweiten Leitungsabschnitt gesperrt ist, und einer Fließstellung umschaltbar, in der die Verbindung zwischen dem ersten Leitungsabschnitt und dem zweiten Leitungsabschnitt geöffnet ist. Dabei weist die Stelleinrichtung einen translatorisch oder durch Rotation verstellbaren Stellkörper auf, der im verbundenen Zustand der Kupplungsanordnung in einem Abstand, das heißt in einer direkten Verbindung zwischen dem ersten Leitungsabschnitt und dem zweiten Leitungsabschnitt positioniert ist. In diesen Stellkörper ist ein Leitungszwischenabschnitt eingelassen, über den der erste Leitungsabschnitt mit dem zweiten Leitungsabschnitt in der Fließstellung verbindbar ist. Dabei ist der Stellkörper zwischen der Sperrstellung und der Fließstellung drehbar gelagert. Der Leitungszwischenabschnitt bildet dadurch eine bewegliche Verbindungsleitung zwischen den Leitungsabschnitten, deren Querschnitt vollständig innerhalb des Stellkörpers ausgebildet ist. Durch diese vollständige Ausbildung des Leitungszwischenabschnittes im Stellkörper und dessen Anordnung in direkter Verbindungslinie beider Leitungsabschnitte ist es möglich, durch eine geringfügige Relativbewegung des Stellkörpers gegenüber den Leitungsabschnitten deren Verbindung herzustellen beziehungsweise vollständig zu trennen. Dabei kann der Leitungszwischenabschnitt in der Fließstellung in eine gemeinsame Flucht zumindest mit einem jeweiligen Endabschnitt der beiden Leitungsabschnitte verbracht werden, wodurch eine sehr geradlinige Verbindung der Leitungsabschnitte über den Leitungszwischenabschnitt möglich ist, die nur sehr geringe Strömungsverluste verursacht. Durch den drehbar gelagerten Stellkörper kann die Kupplungsanordnung zudem insgesamt relativ kompakt ausgeführt werden. Zudem weist der Stellkörper einen ersten Teilkörper, der an einem dem ersten Leitungsabschnitt zugeordneten ersten Gehäuse geführt ist, und einen zweiten Teilkörper auf, der an einem dem zweiten Leitungsabschnitt zugeordneten zweiten Gehäuse geführt ist. Beide Teilkörper sind dabei aneinander anlegbar. Durch diese zweiteilige Ausführungsform des Stellkörpers ist es möglich in der Sperrstellung beide Leitungsabschnitte durch jeweils einen Teilkörper zu verschließen und voneinander zu trennen. Im verbundenen Zustand der Kupplungsanordnung können die Teilkörper, die hierbei aneinander liegen, gemeinsam betätigt werden.

US 3,964,511 beschreibt eine Kupplungsanordnung mit zwei Verbindungsteilen, die eine Fluidverbindung oder eine elektrische Verbindung bilden. Die Kupplungsteile weisen hierzu jeweils einen Teilkörper mit einem darin eingelassenen Leitungszwischenabschnitt auf, der in einem Gehäuseteil drehbar gehalten und an den jeweils anderen Teilkörper anlegebar ist. In diesem angelegten Zustand bilden beide Teilkörper einen Stellkörper mit einem Kreisprofil aus, der hierdurch in seiner Gesamtheit innerhalb der beiden Gehäuseteile um 90 ° verdrehbar ist und dabei die Gehäuseteile gegeneinander verriegelt. Gleichzeitig wird dabei durch die Leitungszwischenabschnitte die betreffende Fluid- oder elektrische Leitung geschlossen.

US 2,397,576 zeigt eine schnell schließbare beziehungsweise trennbare Kupplung für die Verbindung zweier Rohrabschnitte. Auch hier sind zwei aneinander legbare Teilkörper vorgesehen, in die jeweils ein Leitungszwischenabschnitt eingelassen ist und die durch Verdrehen die Leitungsverbindung zwischen den Rohrabschnitten herstellen und diese dabei gleichzeitig gegeneinander verriegeln. EP 1148286 A2, US 3,167,092 und US 2,712,454 beschreiben jeweils eine Kupplung mit einem zweiteiligen, kugelförmigen Stellkörper, der zum Öffnen und Schließen einer Leitung verdrehbar ist.

US 2,399,515 und US 2,334,875 zeigen jeweils einen zweiteiligen, zylindrischen Stellkörper, bei dem ein Leitungszwischenabschnitt in einen der jeweils zwei Teilkörper eingelassen ist.

WO 2006/131139 A1 beschreibt eine elektrische Kupplung bei der zwei Anschlüsse über einen drehbaren Zwischenleiter elektrisch verbindbar sind.

US 2008/0286986 A1 beschreibt eine Kupplungsanordnung, die neben einer Saugrohrkupplung eine elektrische Verbindung mittels eines Stromkabels vorsieht.

DE 10 2004 033 567 A1 zeigt ein Verbindungssystem, bei dem sowohl zwei elektrische Verbindungen als auch zwei Fluidverbindungen über Steckanbindungen mit Hilfe hülsenfömiger Anschlüsse erfolgen.

In WO 2007/147510 A1 ist eine Manschette gezeigt, die zur formschlüssigen Verbindung zweier kragenförmiger Rohrabschlüsse aneinender dienen.

DE 40 30 381 beschreibt eine Kupplungsanordnung zur tropffreien Verbindung/Trennung zweier Leitungen für Flüssigkeiten. Hierzu weist die Kupplungsanordnung zwei Anschlussstücke mit jeweils einem Kanal auf, der mit der zugehörigen Leitung in Fließverbindung steht. Beide Anschlussstücke weisen an ihrem Ende ein in Fluchtrichtung des jeweiligen Kanals stehendes Kopfstück auf, an dem schräge Bohrungen ausgebildet sind, die von dem jeweiligen Kanal abzweigen, wobei die Kopfstücke aneinander festlegbar sind. Auf einem der beiden Anschlussstücke ist ferner eine Manschette gelagert, an deren Innenseite eine Ausnehmung eingelassen ist. Die Manschette ist dabei derart gegenüber den beiden Kopfstücken positionierbar, dass die Ausnehmung einen Bypass bildet, über den die schrägen Bohrungen beider Anschlusstücke miteinander verbunden werden können.

Nachteilig an der bekannten Kupplungsanordnung ist, dass diese relativ hohe Strömungsverluste erzeugt und nur für eine einzige Leitung verwendbar ist. Ferner ist sie aufgrund ihrer komplexen Konstruktionsweise relativ teuer und lediglich für relativ große Fließquerschnitte geeignet.

Die Aufgabe der Erfindung ist es, bei einer tropffreien Kupplungsanordnung die genannten Nachteile zu vermeiden und eine vielseitige Einsatzmöglichkeit bei relativ geringen Strömungsverlusten zu erzielen.

Diese Aufgabe wird durch eine Kupplungsanordnung mit den Merkmalen des Anspruchs 1 gelöst. Dabei weisen die Verbindungsmittel wenigstens eine elektrische Steckverbindung auf, wodurch beim Verbinden der beiden Leitungsabschnitte zusätzlich eine elektrische Verbindung herstellbar ist, die zusätzlich zu der durch die Leitungsabschnitte und den Leitungszwischenabschnitt gebildeten Leitung vorgesehen ist und dadurch unabhängig von der Stellung des Stellkörpers betrieben werden kann.

Dabei weisen die Verbindungsmittel und Verbindungsgegenmittel zur Herstellung der elektrischen Steckverbindung an den Gehäusen elektrische Stecker und entsprechende Steckeraufnahmen auf.

Hierbei können die Stecker und Steckeraufnahmen zur paarweisen Herstellung der elektrischen Steckverbindung jeweils an beiden Gehäusen vorgesehen sein.

Zudem können die Stecker und Steckeraufnahmen dabei Kontaktklemmen und Kontaktzungen aufweisen, die auf die Kontaktklemmen aufschiebbar sind.

In einer besonders vorteilhaften Ausführungsform stimmt dabei ein Zwischenquerschnitt des Leitungszwischenabschnittes hinsichtlich Form und Größe mit einem ersten Querschnitt des ersten Leitungsabschnittes und einem zweiten Querschnitt des zweiten Leitungsabschnittes überein, wodurch die Strömungsverluste minimiert werden.

Ferner ist es günstig, wenn der Leitungszwischenabschnitt in einer Durchgangsbohrung des Stellkörpers vorgesehen ist, wodurch der Leitungszwischenabschnitt eine minimale Erstreckung aufweisen kann.

Zudem ist es günstig, wenn die Verbindungsmittel am ersten Teilkörper Codierungsmittel aufweisen, die mit Codierungsgegenmitteln des zweiten Teilkörpers zusammen steckbar sind, die als Verbindungsgegenmittel fungieren. Derartige Codierungsmittel und Codierungsgegenmittel können dabei einerseits zur Kopplung der beiden Leitungsabschnitte dienen. Andererseits kann durch die Codierungsmittel, beispielsweise im Falle eines Systems mit einer Mehrzahl von Kupplungsanordnungen, sichergestellt werden, dass lediglich einander zugehörige Leitungsabschnitte miteinander verbunden werden können.

Vorteilhafterweise weisen die Verbindungsmittel und Verbindungsgegenmittel am Stellkörper Formschlussmittel und Formschlussgegenmittel auf Über diese ist in der Fließstellung ein Formschluss zwischen beiden Leitungsabschnitten herstellbar. In der Sperrstellung kann der Formschluss dagegen wieder aufgehoben werden. Hierdurch ist es möglich, in Abhängigkeit der Stellung des Stellkörpers neben dem Umschalten zwischen der Sperrstellung und der Fließstellung gleichzeitig auch einen Formschluss zwischen der ersten und zweiten Einheit zu lösen oder herzustellen.

Ferner ist es günstig, wenn die Verbindungsmittel und Verbindungsgegenmittel separat zum Stellkörper Verriegelungsmittel und Verriegelungsgegenmittel aufweisen, mittels denen die Leitungsabschnitte unabhängig von der Stellung der Stelleinrichtung aneinander verriegelbar sind. Auf diese Weise können die erste Einheit und die zweite Einheit auch in der Sperrstellung sicher aneinander festgelegt werden.

In einer weiteren vorteilhaften Ausführungsform weist der Stellkörper eine im Wesentlichen zylindrische Außenfläche auf. Diese ist dabei durch eine im Wesentlichen zylindrische Innenfläche der Gehäuse geführt. Die zylindrische Form des Stellkörpers und der Innenfläche der Gehäuseführung ermöglichen dabei ein dichtes Aneinanderliegen beider Elemente.

Dabei ist es günstig, wenn der Stellkörper einen als Formschlussmittel fungierenden ringabschnittförmigen Rand aufweist, der im verbundenen Zustand der Kupplungsanordnung in Abhängigkeit der Drehposition des Stellkörpers einen Formschluss mit einem gehäuseseitigen Formschlussgegenmittel herstellt oder löst. Hierdurch kann mit dem Verstellen der Stelleinrichtung zwischen der Sperrstellung und der Fließstellung gleichzeitig ein stabiler Formschluss zwischen beiden Leitungsabschnitten über den Stellkörper hergestellt werden.

Alternativ hierzu ist es günstig, wenn der Stellkörper an einem der Teilkörper männliche Elemente und am jeweils anderen Teilkörper dazu komplementäre weibliche Elemente aufweist, die in der Sperrstellung entlang einer Montagerichtung zusammen steckbar sind und, insbesondere nach Verdrehen des Stellkörpers um 90°, in der Fließstellung entlang der Montagerichtung einen Formschluss erzeugen. Auf diese Weise kann ein vom Stellkörper selbst erzeugter lösbarer Formschluss mit besonders einfachen Mitteln umgesetzt werden.

Dabei ist es vorteilhaft, wenn wenigstens der Stellkörper aus zwei baugleichen Teilkörpern zusammensetzbar ist, wodurch dieser insgesamt einfacher und kostengünstiger herstellbar ist. Darüber hinaus ist es auch möglich, dass die Verbindungsmittel insgesamt und/oder die Bauteile der Kupplungsanordnung, die die Leitungsabschnitte bilden zumindest teilweise aus baugleichen Elementen hergestellt sind. Auf diese Weise können die Herstellungskosten der Kupplungsanordnung durch die zweifache Verwendung von mehreren Elementen deutlich reduziert werden.

Vorteilhafterweise sind die erste Einheit und/oder die zweite Einheit durch fluidgekühlte Leiterplatten gebildet, wodurch ein tropfsicheres Trennen beider Einheiten ermöglicht und Schäden an den Leiterplatten vermieden werden können.

Vorteilhafterweise ist wenigstens eines der Gehäuse über eine Steckanbindung an der betreffenden Leiterplatte montierbar, wodurch eine besonders einfache Anbindung der Kupplungsanordnung an der betreffenden Leiterplatte möglich ist.

Hierbei ist es günstig, wenn die Steckanbindung über eine Anschlusshülse herstellbar ist, die über eine erste Verbindung mit einem Kühlkanal der Leiterplatte und über eine zweite Verbindung, die als Steckverbindung ausgebildet ist, mit einem der Leitungsabschnitte verbindbar ist. Auf diese Weise kann die Kupplungsanordnung durch Auswahl einer geeigneten Länge der Anschlusshülse in einem gewünschten Abstand gegenüber der Leiterplatte angeordnet werden, um beispielsweise einen ausreichenden Bauraum für elektronische Bauelemente der Leiterplatte vorzuhalten. Zudem kann eine derartige Anschlusshülse vor beziehungsweise mit dem Lötprozess an der betreffenden Leiterplatte wie beispielsweise durch Kleben oder Löten oder auch durch eine Steckverbindung festgelegt werden. Die Befestigung des jeweiligen Gehäuses an der Leiterplatte kann dagegen zu einem späteren Zeitpunkt durch einfaches Anstecken erfolgen, wodurch die Herstellung und Montage der Leiterplatte inklusive Kupplungsanordnung erhebliche vereinfacht werden kann.

Dabei ist es ferner günstig, wenn die Anschlusshülse wenigstens eine elektrische leitende Außenseite aufweist, die gegenüber einem sich durch die Hülse erstreckenden Fluidkanal isoliert ist, wodurch über die Anschlusshülse sowohl eine Fluidverbindung als auch eine elektrische Verbindung herstellbar ist.

Vorteilhafterweise ist die Steckanbindung an einem Rand der Leiterplatte vorgesehen, an dem ein Kühlkanal austritt, was einen besonders flachen Aufbau der Leiterplatte ermöglicht. Das betreffende Gehäuse kann hierbei, wie auch bei den vorhergehend beschriebenen Ausführungsformen der Kupplungsanordnung, eine Krümmung des jeweiligen Leitungsabschnittes aufweisen, um beispielsweise ein Kühlfluid nach Austritt aus einer Leiterplatte in eine andere Richtung umzulenken.

In den Figuren ist eine beispielhafte Ausführungsform der Erfindung dargestellt. Es zeigen:
- Figur 1: eine perspektivische Ansicht der erfindungsgemäßen Kupplungsanordnung im getrennten Zustand,
- Figur 2: eine perspektivische Ansicht der Kupplungsanordnung nach Fig. 1 im verbundenen Zustand,
- Figur 3: einen Schnitt durch die Kupplungsanordnung nach Fig. 2 auf Höhe von Leitungsabschnitten zur Herstellung einer Fluidverbindung in einer Sperrstellung,
- Figur 4: einen Schnitt durch die Kupplungsanordnung gemäß Fig. 3 in einer Fließstellung.
- Figur 5: eine perspektivische Ansicht einer Unterseite eines Gehäuses der Kupplungsanordnung,
- Figur 6: einen Schnitt durch eine elektrische Verbindung der Kupplungsahordnung nach Fig. 2.
- Figur 7: eine perspektivische Ansicht einer ersten alternative Ausführungsform der Kupplungsanordnung im getrennten Zustand,
- Figur 8: eine, perspektivische Ansicht einer zweiten alternativen Ausführungsform der Kupplungsanordnung im getrennten Zustand,
- Figur 9: eine perspektivische Ansicht der Kupplungsanordnung nach Fig. 8 im verbundenen Zustand in Sperrstellung,
- Figur 10: eine perspektivische Ansicht der Kupplungsanordnung nach Fig. 9 in Fließstellung,
- Figur 11: eine perspektivische Ansicht einer Steckanbindung zwischen der Kupplungsanordnung und einer Leiterplatte, am Beispiel der Kupplungsanordnung nach Fig. 1 bis 6, im getrennten Zustand,
- Figur 12: eine perspektivische Ansicht der Kupplungsanordnung mit der Steckanbindung nach Fig. 11 im zusammen gesteckten Zustand,
- Figur 13: einen Schnitt durch die Steckanbindung nach Fig. 11 im zusammen gesteckten Zustand
- Figur 14: einen Schnitt durch eine alternative Steckanbindung,
- Figur 15: eine perspektivische Ansicht der erfindungsgemäßen Kupplungsanordnung bei einer alternativen Verwendung zwischen einer Leiterplatte und einem Kabel-/Leitungsstrang im getrennten Zustand,
- Figur 16: eine perspektivische Ansicht der erfindungsgemäßen Kupplungsanordnung bei einer weiteren alternativen Verwendung zwischen einem Rand einer Leiterplatte und einem Kabel-/Leitungsstrang, am Beispiel der Kupplungsanordnung gemäß Fig. 1 bis 6 und
- Figur 17: einen Schnitt der erfindungsgemäßen Kupplungsanordnung bei einer weiteren Verwendung zwischen zwei Kabel-/Leitungssträngen.

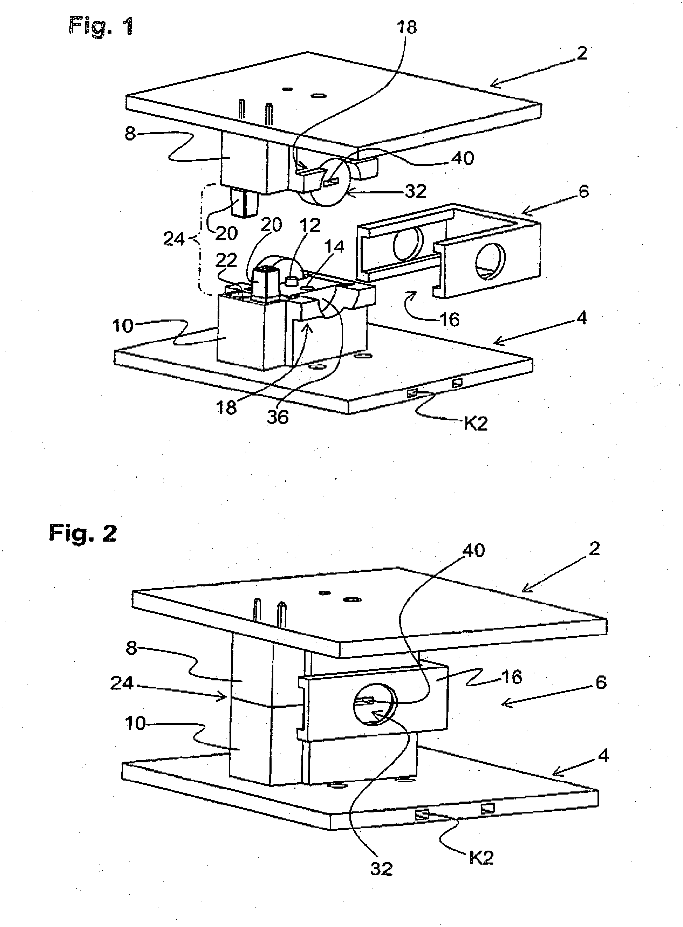

Fig. 1 und 2 zeigt eine erste Einheit 2 und eine zweite Einheit 4, die jeweils durch eine elektronische Leiterplatte gebildet sind. Die Einheiten 2 und 4 sind dabei über eine Kupplungsanordnung 6 miteinander verbindbar, die ein mit der ersten Einheit 2 verbundenes erstes Gehäuse 8 und ein mit der zweiten Einheit 4 verbundenes zweites Gehäuse 10 aufweist.

Die beiden Gehäuse 8, 10 können dabei über Verbindungsmittel und Verbindungsgegenmittel lösbar aneinander festgelegt werden. Diese weisen beispielsweise noppenförmige Codierungsmittel 12 und dazu komplementär geformte bohrungsförmige Codierungsgegenmittel 14, Verriegelungsmittel 16 und Verriegelungsgegenmittel 18 zur Herstellung eines lösbaren Formschlusses sowie elektrische Stecker 20 und entsprechende Steckeraufnahmen 22 zur Herstellung einer elektrischen Steckverbindung 24 auf. Sowohl die Codierungsmittel 12 und Codierungsgegenmittel 14 als auch die Stecker 20 und Steckeraufnahmen 22 sind dabei beidseitig, das heißt jeweils an beiden Gehäusen 8, 10 vorgesehen. Auf dieses Weise entsteht beim Verbinden beider Gehäuse 8, 10 sowohl eine paarweise elektrische Steckverbindung 24 als auch eine paarweise Codierungsverbindung.

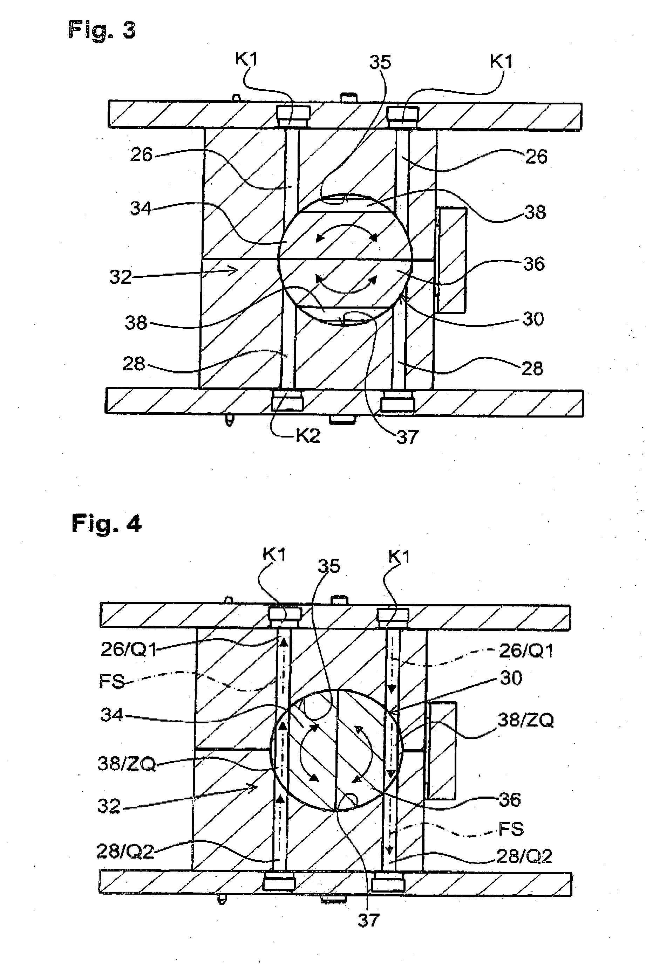

Die Kupplungsanordnung 6 dient dabei neben der Herstellung der elektrischen Steckverbindung 24 insbesondere zur Herstellung einer Fluidverbindung zwischen Kühlungskanälen K2 der zweiten Einheit 4 mit Kühlungskanälen K1 der ersten Einheit, wie in Fig. 3 und 4 dargestellt. Die Fluidverbindung ist dabei tropffrei herstellbar beziehungsweise trennbar, um mögliche Schäden an den Leiterplatten zu vermeiden.

Die Kupplungsanordnung 6 weist hierzu erste Leitungsabschnitte 26 im ersten Gehäuse 8 und zweite Leitungsabschnitte 28 im zweiten Gehäuse 10 auf, die unter Zwischenlage eines zylindrischen Stellkörpers 30 einer Stelleinrichtung 32 koaxial zueinander ausgerichtet sind. Der Stellkörper 30 ist dabei zwischen einer Sperrstellung gemäß Fig. 3, in der die Verbindung zwischen den ersten Leitungsabschnitten 26 und den zweiten Leitungsabschnitten 28 gesperrt ist, und einer Fließstellung, in der die Verbindung zwischen den ersten Leitungsabschnitten 26 und den zweiten Leitungsabschnitten 28 geöffnet ist, umschaltbar.

Zudem weist der Stellkörper, wie aus den Fig. 3 und 4 ferner zu entnehmen ist, einen ersten Teilkörper 34 auf, der an einer entsprechend zylindrisch geformten Innenfläche 35 des ersten Gehäuses 8 gelagert und geführt ist. Dieser liegt im dargestellten verbundenen Zustand an einem baugleichen zweiten Teilkörper 36 an, der an einer zylindrisch geformten Innenfläche 37 des zweiten Gehäuses 10 gelagert und geführt ist. Zur Herstellung einer Verbindung zwischen den Leitungsabschnitten 26. 28 ist in die Teilkörper 34, 36 jeweils ein Leitungszwischenabschnitt 38 als Durchgangsbohrung eingelassen.

In der Sperrstellung der Stelleinrichtung 32 (gemäß Fig. 3) beziehungsweise im getrennten Zustand der Kupplungsanordnung 6 (gemäß Fig. 1) sind die Leitungszwischenabschnitte 38 in eine zu den Leitungsabschnitten 26, 28 um 90° verdrehte Drehposition verbracht, in der sie von diesen getrennt sind. Die Leitungsabschnitte 26, 28 werden hierbei somit durch den jeweiligen Teilkörper 34, 36 verschlossen.

Nach dem Verbinden der Kupplungsanordnung 6 gemäß Fig. 2 kann die Stelleinrichtung 32 über einen Schlitz 40, der zur Aufnahme eines handelsüblichen Werkzeuges, wie beispielsweise eines Schraubenziehers (nicht dargestellt), dient, um 90° in die in Fig. 4 dargestellte Fließstellung verdreht werden.

Hierbei werden die aneinander liegenden und über die Codierungsmittel 12, 14 ineinander greifenden Teilkörper 34, 36 gleichzeitig in die Fließstellung verdreht, in der die Leitungszwischenabschnitte 38 koaxial zu den Leitungsabschnitten 26, 28 angeordnet sind und diese somit miteinander verbinden, um wie durch die Pfeile FS in Fig. 4 dargestellt, eine Fluidströmung des Kühlmittels zur ermöglichen.

Um hierbei mögliche Strömungsverluste in Folge des Stellkörpers 30 zu minimieren, weisen die Leitungszwischenabschnitte 38 Zwischenquerschnitte ZQ auf, die bezüglich Größe und Form identischen mit einem ersten Querschnitt Q1 der ersten Leitungsabschnitte 26 und einem zweiten Querschnitt Q2 der zweiten Leitungsabschnitte 28 sind.

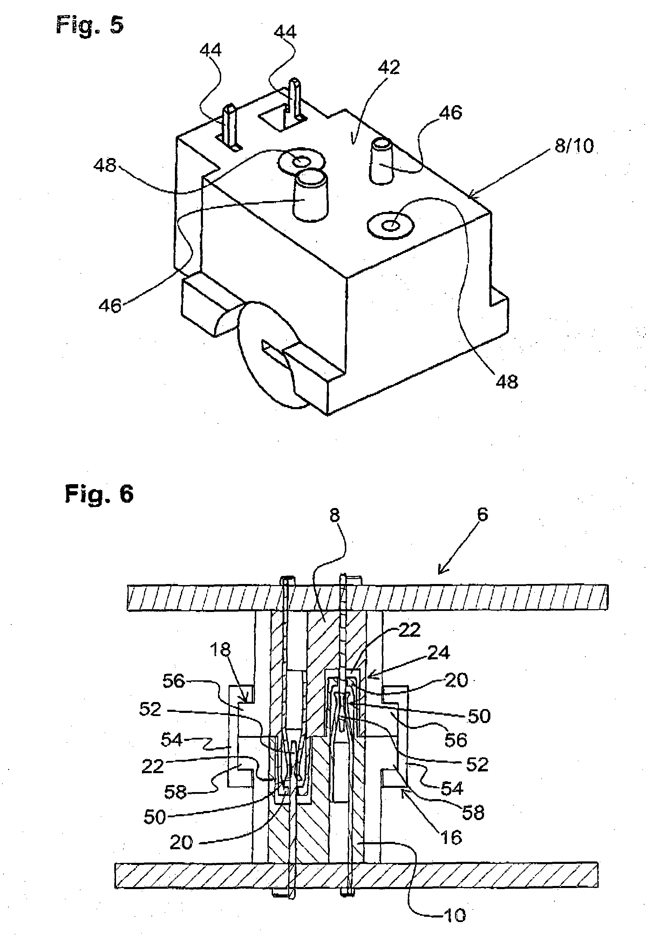

In Fig. 5 ist eine Unterseite 42 eines der Gehäuse 8, 10 dargestellt. An dieser sind zur steckbaren Verbindung mit der betreffenden Einheit 2, 4 elektrische Kontaktzungen 44, und Klemmkörper 46 vorgesehen, die an entsprechenden Klemmaufnahmen (nicht dargestellt) der Einheiten 2; 4 festlegbar sind. Ferner sind hieraus zwei Leitungsöffnungen 48 zu entnehmen, über die die Fluidverbindung mit den Kühlkanälen K1, K2 (siehe Fig. 2) herstellbar sind.

Fig. 6 zeigt einen Schnitt durch die elektrische Steckverbindung 24 im verbundenen Zustand der Kupplungsanordnung 6. Wie hieraus zu entnehmen ist, weisen die elektrischen Stecker 20 Kontaktklemmen 50 auf, die auf Kontaktzungen 52 aufgeschoben sind, die innerhalb der Steckeraufnahmen 22 angeordnet sind.

Wie aus Fig. 6 ferner zu entnehmen ist, sind die Verriegelungsmittel 16 durch einen Bügel mit zwei Armen 54 mit jeweils U-förmigem Profil gebildet. In dem dargestellten verriegelten Zustand hintergreift jeder der Arme 54 jeweils einen ersten Absatz 56 des ersten Gehäuses 8 und einen zweiten Absatz 58 des zweiten Gehäuses 10 und legt diese dadurch formschlüssig aneinander fest.

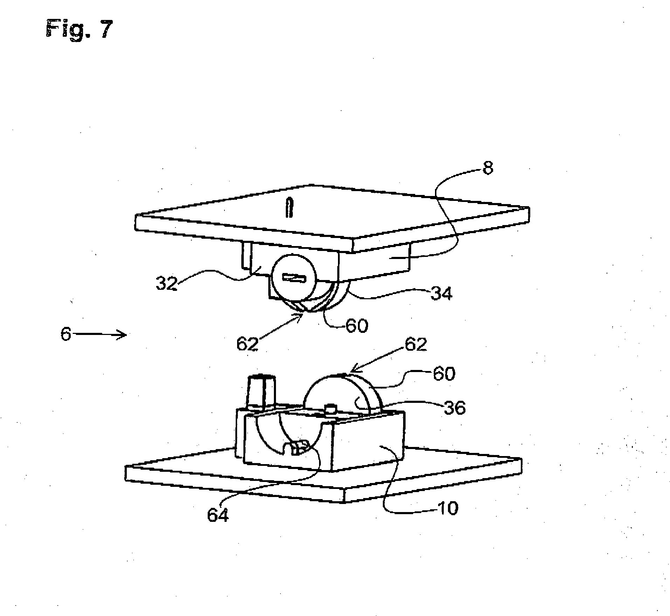

Fig 7 zeigt eine alternative Ausführungsform der Kupplungsanordnung 6, bei der an den Teilkörpern 34, 36 jeweils ein Formschlussmittel in Form eines ringabschnittförmigen Randes 60 ausgebildet ist. Dieser Rand 60 weist dabei eine Unterbrechung 62 auf, an der ein durch ein Hintergreifelement 64 gebildetes Formschlussgegenmittel beim Verbinden beider Teilkörper 34, 36 den Rand 60 passieren kann. Das Hintergreifelement 64 ist dabei am jeweiligen Gehäuse 8, 10 ausgebildet. Wenn im verbundenen Zustand nun die Stelleinrichtung 32 von der dargestellten Sperrstellung in die Fließstellung verdreht wird, wird gleichzeitig der Rand 60 gegenüber dem jeweiligen Hintergreifelement 64 verdreht und erzeugt dadurch eine formschlüssige Verbindung zwischen beiden Gehäusen 8, 10.

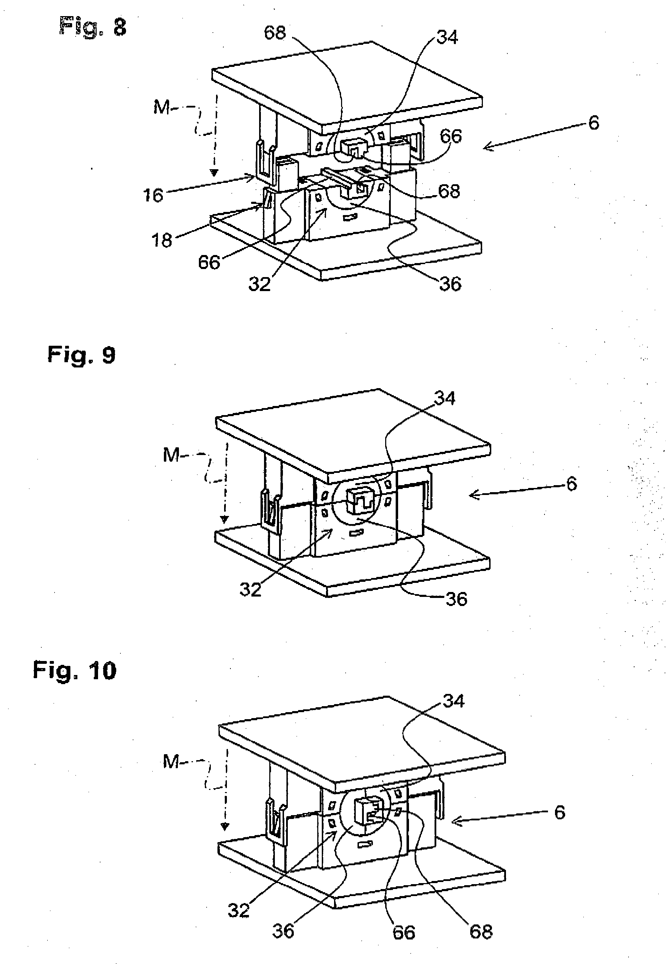

Die Fig. 8 bis 10 zeigen eine weitere alternative Ausführungsform der Kupplungsanordnung 6. Bei dieser sind an den Teilkörpern 34, 36 des Stellkörpers 30 jeweils Formschlussmittel in Form von männlichen Elementen 66 und Formschlussgegenmittel in Form von komplementären weiblichen Elementen 68 ausgeformt, die beim Verbinden der Kupplungsanordnung 6 entlang einer Montagerichtung M ineinander gesteckt werden können.

Beim Verdrehen der Stelleinrichtung 32 aus dieser in Fig. 9 dargestellten Sperrstellung in die in Fig. 10 dargestellte Fließstellung erzeugen die männlichen Elemente 66 zusammen mit den weiblichen Elementen 68 einen Formschluss, der die Teilkörper 34, 36 in Montagerichtung M aneinander festlegt.

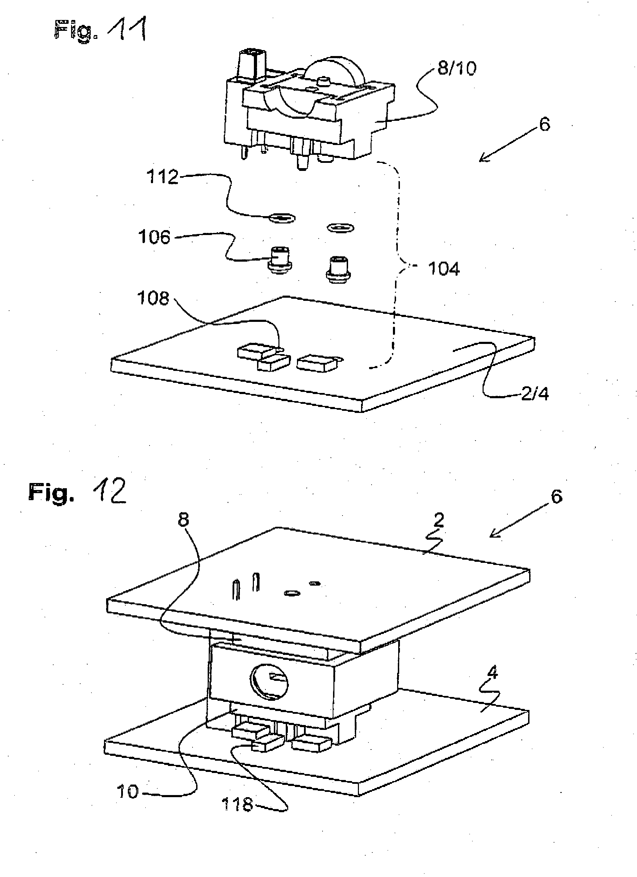

Wie in Fig. 11 und 12 am Beispiel der Kupplungsanordnung 6 gemäß Fig. 1 bis 6 dargestellt, können die Gehäuse 8; 10 der Kupplungsanordnung 6 über eine Steckanbindung 104 mit der betreffenden Einheit 2, 4 verbunden werden.

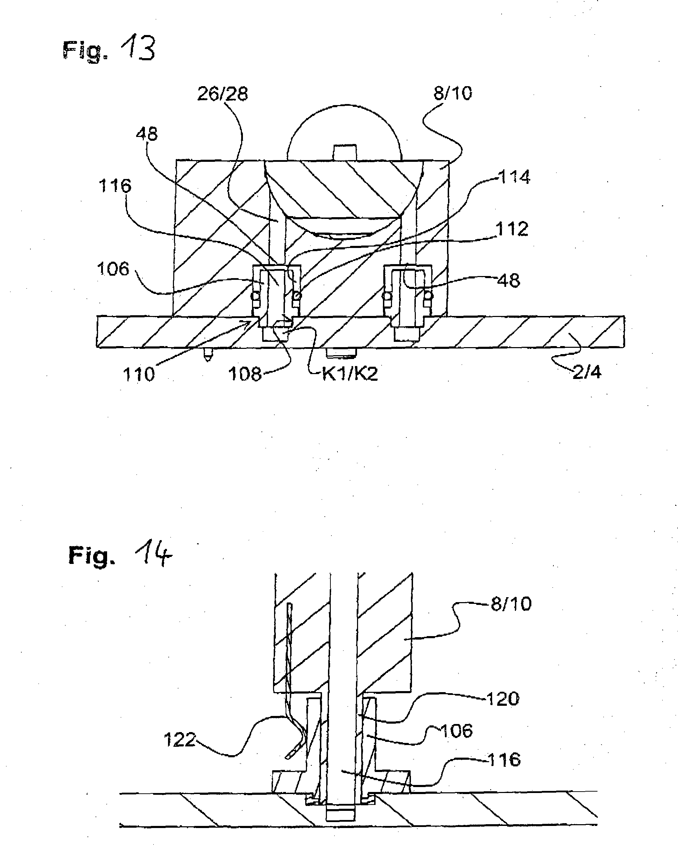

Hierzu ist zwischen dem Gehäuse 8; 10 und der Einheit 2; 4 wenigstens eine Anschlusshülse 106 vorgesehen, die mit einem ersten Ende in eine entsprechende Steckaufnahme 108 der Einheit 2; 4 zur Ausbildung einer ersten Verbindung 110 einsteckbar ist, wie insbesondere aus Fig. 13 zu entnehmen ist. Die Anschlusshülse 106 kann dabei allein durch Klemmwirkung an der Steckaufnahme 108 gehalten sein oder aber alternativ oder zusätzlich durch Kleben oder Löten mit der Einheit 2; 4 verbunden sein. Insbesondere kann die erste Verbindung 110 dabei vor oder während einem Lötprozess zur Bestückung der Einheit 2: 4 hergestellt werden.

Die Steckaufnahme 108 ist bei hergestellter Verbindung 110 mit einem der Kühlkanäle K1; K2 der Einheit 2, 4 verbunden. Ein zweites Ende der Anschlusshülse 106 ist unter Zwischenlage einer Dichtung 112 in eine entsprechende Hülsenaufnahme 114 des Gehäuses 8; 10 einsteckbar, die an der Leitungsöffnung 48 des betreffenden Leitungsabschnittes 26; 28 vorgesehen ist. Hierdurch bildet die Anschlusshülse 106 mit dem betreffenden Gehäuse 8; 10 eine steckbare zweite Verbindung 115, die insbesondere nach Abschluss des oben genannten Lötprozesses an der Einheit 2; 4 bequem hergestellt werden kann.

Insgesamt wird auf diese Weise der Kühlkanäle K1; K2 über einen Fluidkanal 116 der Anschlusshülse 106 zum Transport eines Kühlfluids mit dem betreffenden Leitungsabschnitt 26; 28 verbunden.

Die Länge der Anschlusshülse 106 kann dabei so gewählt werden, dass das betreffende Gehäuse 8; 10 in einem derartigen Abstand zur jeweiligen Einheit 2; 4 gehalten ist, dass dazwischen sonstige Bauelemente 118, wie insbesondere elektronische Bauelemente einer Leiterplatte, Platz finden können, wie in Fig. 12 dargestellt.

Wie in Fig. 14 dargestellt, ist es zudem möglich, dass die Anschlusshülse 106 aus elektrisch leitfähigem Material hergestellt ist und durch eine vom Gehäuse 8; 10 abstehende und die Anschlusshülse 106 durchragende Isolierhülse 120 vom Fluidkanal 116 isoliert ist. Hierdurch kann beim Herstellen der Steckanbindung über die Anschlusshülse 106 neben der Herstellung der Fluidverbindung zusätzlich ein elektrischer Kontakt mit einem entsprechenden Kontaktelement 122 des Gehäuses 8; 10 hergestellt werden.

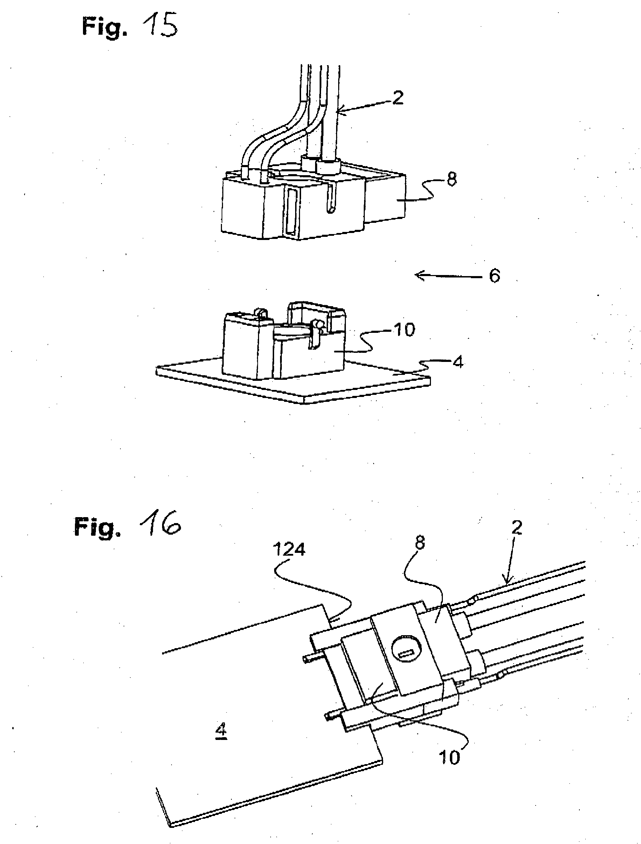

Fig. 15 zeigt eine alternative Verwendungsform der erfindungsgemäßen Kupplungsanordnung 6 bei der das erste Gehäuse 8 an einem Kabel-/Leitungsstrang als erste Einheit 2 vorgesehen ist. Das zweite Gehäuse 10 ist dagegen an einer als Leiterplatte ausgebildeten zweiten Einheit vorgesehen.

Fig. 16 zeigt eine weitere alternative Verwendungsform der erfindungsgemäßen Kupplungsanordnung am Beispiel der Ausführungsform nach Fig. 1 bis 6, wobei das erste Gehäuse 8 wiederum an einer als Kabel-/Leitungsstrang ausgebildeten ersten Einheit 2 und das zweite Gehäuse 10 derart ausgeformt ist, dass es an einem Rand 124 der als Leiterplatte ausgebildeten zweiten Einheit 4 festlegbar ist, um mit einem hieran austretenden Kühlkanal (nicht dargestellt) verbunden werden zu können.

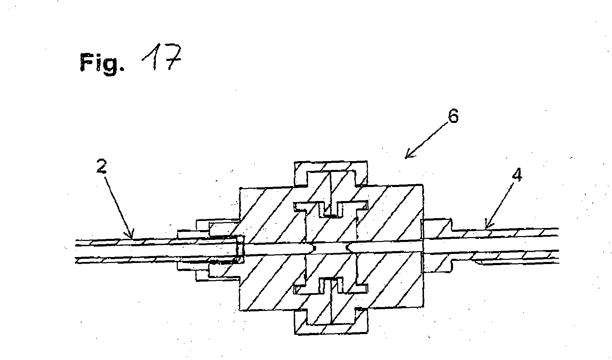

In Fig. 17 ist eine weitere Ausführungsform der Kupplungsanordnung 6 dargestellt, bei der beide Einheiten 2, 4 als Kabel-/Leitungsstrang ausgeführt sind. Alternativ zu den dargestellten Verwendungsformen können alle vorangehend beschriebenen Ausführungsformen der erfindungsgemäßen Kupplungsanordnung 6 über beide Gehäuse 8, 10 mit jeweils einer als Leiterplatte oder mit jeweils einer als Kabel-/Leitungsstrang ausgebildeten Einheit 2, 4 verbunden sein. Alternativ hierzu kann aber auch jeweils nur eines der Gehäuse 8; 10 mit einer als Leiterplatte oder einer als Kabel-/Leitungsstrang ausgebildeten Einheit 2, 4 verbunden sein.

## Patentansprüche

1. Kupplungsanordnung (6) zur lösbaren Verbindung eines an einer ersten Einheit (2) vorgesehenen ersten Leitungsabschnittes (26) mit einem an einer zweiten Einheit (4) vorgesehenen zweiten Leitungsabschnitt (28), mit an der ersten Einheit (2) anbringbaren Verbindungsmitteln, mit an der zweiten Einheit (4) anbringbaren Verbindungsgegenmitteln, die an den Verbindungsmitteln festlegbar sind und mit einer zwischen dem ersten Leitungsabschnitt (26) und dem zweiten Leitungsabschnitt (28) positionierbaren Stelleinrichtung (32), die zwischen einer Sperrstellung, in der die Verbindung zwischen dem ersten Leitungsabschnitt (26) und dem zweiten Leitungsabschnitt (28) gesperrt ist, und einer Fließstellung, in der die Verbindung zwischen dem ersten Leitungsabschnitt (26) und dem zweiten Leitungsabschnitt (28) geöffnet ist, umschaltbar ist,
wobei die Stelleinrichtung (32) einen zwischen der Sperrstellung und der Fließstellung drehbar gelagerten Stellkörper (30) aufweist, der in einem Abstand zwischen dem ersten Leitungsabschnitt (26) und dem zweiten Leitungsabschnitt (28) positionierbar ist und in den ein Leitungszwischenabschnitt (38) eingelassen ist, über den der erste Leitungsabschnitt (26) mit dem zweiten Leitungsabschnitt (28) verbindbar ist und
der einen ersten Teilkörper (34), der an einem dem ersten Leitungsabschnitt (26) zugeordneten ersten Gehäuse (8) geführt ist, und einen zweiten Teilkörper (36), der an einem dem zweiten Leitungsabschnitt (28) zugeordneten zweiten Gehäuse (10) geführt ist, aufweist, wobei beide Teilkörper (34, 36) aneinander anlegbar sind,
**dadurch gekennzeichnet, dass** die Verbindungsmittel wenigstens eine von der Stelleinrichtung unabhängige elektrische Steckverbindung (24) aufweisen, die beim Verbinden beider Gehäuse (8, 10) hergestellt wird.

2. Kupplungsanordnung nach Anspruch 1, **dadurch gekennzeichnet, dass** die Verbindungsmittel und Verbindungsgegenmittel zur Herstellung der elektrischen Steckverbindung (24) an den Gehäusen (8, 10) elektrische Stecker (20) und entsprechende Steckeraufnahmen (22) aufweisen.

3. Kupplungsanordnung nach Anspruch 2, **dadurch gekennzeichnet, dass** die Stecker (20) und Steckeraufnahmen (22) zur paarweisen Herstellung der elektrischen Steckverbindung (24) jeweils an beiden Gehäusen (8, 10) vorgesehen sind.

4. Kupplungsanordnung nach Anspruch 2 oder 3, **dadurch gekennzeichnet, dass** die Stecker (20) und Steckeraufnahmen (22) Kontaktklemmen (50) und Kontaktzungen (52) aufweisen, auf die die Kontaktklemmen (50) aufschiebbar sind.

5. Kupplungsanordnung nach einem der Ansprüche 1 bis 4, **dadurch gekennzeichnet, dass** ein Zwischenquerschnitt (ZQ) des Leitungszwischenabschnittes (38) mit einem ersten Querschnitt (Q1) des ersten Leitungsabschnittes (26) und einem zweiten Querschnitt (Q2) des zweiten Leitungsabschnittes (28) übereinstimmt.

6. Kupplungsanordnung nach einem der Ansprüche 1 bis 5, **dadurch gekennzeichnet, dass** der Leitungszwischenabschnitt (38) in einer Durchgangsbohrung des Stellkörpers (30) vorgesehen ist.

7. Kupplungsanordnung nach einem der Ansprüche 1 bis 6, **dadurch gekennzeichnet, dass** die Verbindungsmittel und Verbindungsgegenmittel am ersten Teilkörper (34) Codierungsmittel (12) aufweisen, die mit Codierungsgegenmitteln (14) des zweiten Teilkörpers (36) zusammen steckbar sind.

8. Kupplungsanordnung nach einem der Ansprüche 1 bis 7, **dadurch gekennzeichnet, dass** die Verbindungsmittel und Verbindungsgegenmittel am Stellkörper (30) Formschlussmittel und Formschlussgegenmittel aufweisen, über die in der Fließstellung ein Formschluss zwischen beiden Leitungsabschnitten (26, 28) herstellbar ist, wobei der Formschluss in der Sperrstellung aufhebbar ist.

9. Kupplungsanordnung nach einem der Ansprüche 1 bis 8, **dadurch gekennzeichnet, dass** die Verbindungsmittel und Verbindungsgegenmittel Verriegelungsmittel (16) und Verriegelungsgegenmittel (18) aufweisen, mittels denen die Leitungsabschnitte (26, 28) unabhängig von der Stellung der Stelleinrichtung (32) aneinander verriegelbar sind.

10. Kupplungsanordnung nach einem der Ansprüche 1 bis 9, **dadurch gekennzeichnet, dass** der Stellkörper (30) eine im Wesentlichen zylindrische Außenfläche aufweist und durch eine im Wesentlichen zylindrische Innenfläche (35, 37) der Gehäuse (8, 10) geführt ist.

11. Kupplungsanordnung nach einem der Ansprüche 1 bis 10, **dadurch gekennzeichnet, dass** der Stellkörper (30) einen als Formschlussmittel fungierenden ringabschnittförmigen Rand (60) aufweist, der in Abhängigkeit der Drehposition des Stellkörpers (30) eine formschlüssige Verbindung mit einem gehäuseseitigen Formschlussgegenmittel bildet.

12. Kupplungsanordnung nach einem der Ansprüche 1 bis 11, **dadurch gekennzeichnet, dass** der Stellkörper (30) an einem der Teilkörper (34, 36) männliche Elemente (66) und am jeweils anderen Teilkörper (34, 36) dazu komplementäre weibliche Elemente (68) aufweist, die in der Sperrstellung entlang einer Montagerichtung (M) zusammen steckbar sind und in der Fließstellung entlang der Montagerichtung (M) einen Formschluss erzeugen.

13. Kupplungsanordnung nach einem der Ansprüche 1 bis 12, **dadurch gekennzeichnet, dass** wenigstens die Teilkörper (34, 36) baugleich ausgebildet sind.

14. Kupplungsanordnung nach einem der Ansprüche 1 bis 13, **dadurch gekennzeichnet, dass** die erste Einheit (2) und/oder die zweite Einheit (4) durch fluidgekühlte Leiterplatten gebildet sind.

15. Kupplungsanordnung nach Anspruch 14, **dadurch gekennzeichnet, dass** wenigstens eines der Gehäuse (8, 10) über eine Steckanbindung (104) an der betreffenden Leiterplatte montierbar ist.

16. Kupplungsanordnung nach Anspruch 15, **dadurch gekennzeichnet, dass** die Steckanbindung (104) über eine Anschlusshülse (106) herstellbar ist, die über eine erste Verbindung (110) mit einem Kühlkanal (K1; K2) der Leiterplatte und über eine steckbare zweite Verbindung (115) mit einem der Leitungsabschnitte (26; 28) verbindbar ist.

17. Kupplungsanordnung nach Anspruch 16, **dadurch gekennzeichnet, dass** die Anschlusshülse (106) eine elektrische leitende Außenseite aufweist, die gegenüber einem sich durch die Anschlusshülse (106) erstreckenden Fluidkanal (116) isoliert ist.

18. Kupplungsanordnung nach einem der Ansprüche 15 bis 17, **dadurch gekennzeichnet, dass** die Steckanbindung (104) an einem Rand (124) der Leiterplatte vorgesehen ist, an dem ein Kühlkanal (K1; K2) austritt.

## Claims

1. Coupling arrangement (6) for releasably connecting a first line segment (26) provided on a first unit (2) to a second line segment (28) provided on a second unit (28), comprising connecting means that can be applied to the first unit (2) and connecting counter-means that can be applied to the second unit (4) and that can be fixed to the connecting means, and a control device (32) that can be positioned between the first line segment (26) and the second line segment (28) and that can be switched between a blocking position, in which the connection between the first line segment (26) and the second line segment (28) is blocked, and a flow position, in which the connection between the first line segment (26) and the second line segment (28) is open,
wherein the control device (32) comprises a control body (30) rotatably supported between the blocked position and the flow position, that can be positioned at a distance between the first line segment (26) and the second line segment (28), and in which an intermediate line segment (26) is embedded, by means of which the first line segment (26) can be connected to the second line segment (28),
which comprises a first part body (34), which is guided at a first housing (8) allocated to the first line segment (26), and a second part body (36), which is guided at a second housing (10) allocated to the second line segment (28), wherein both part bodies (34, 36) can be laid against one another,
**characterized in that** the connecting means comprise at least one electrical plug connection (24) independent of the control device, which is formed by the connection of the two housings (8, 10).

2. Coupling arrangement according to claim 1, **characterized in that** the connecting means and connecting counter-means for producing the electrical connection (24) at the housings (8, 10) comprise electrical plugs (20) and corresponding plug receivers (22).

3. Coupling arrangement according to claim 2, **characterized in that** the plugs (20) and plug receivers (22) are provided in each case at both housings (8, 10) for the paired formation of the electrical plug connection (24).

4. Coupling arrangement according to claim 2 or 3, **characterized in that the** plugs (20) and plug receivers (22) comprise contact clips (50) and contact tongues (52), onto which the contact clips (50) can be pushed.

5. Coupling arrangement according to one of claims 1 to 4, **characterized in that** an intermediate cross-section (ZQ) of the line intermediate segment (38) matches with a first cross-section (Q1) of the first line segment (26) and a second cross-section (Q2) of the second line segment (28).

6. Coupling arrangement according to one of claims 1 to 5, **characterized in that** the line intermediate segment (38) is provided in a passage aperture of the control body (30).

7. Coupling arrangement according to one of claims 1 to 6, **characterized in that** the connecting means and connecting counter-means at the first part body (34) comprise coding means (12) which can be plugged together with coding counter-means (14) of the second part body (36).

8. Coupling arrangement according to one of claims 1 to 7, **characterized in that** the connecting means and connecting counter-means at the control body (30) comprise positive connecting means and positive connecting counter-means, by means of which, in the flow position, a positive fit connection can be produced between both line segments (26, 28), wherein the positive fit connection can be suspended in the blocked position.

9. Coupling arrangement according to one of claims 1 to 8, **characterized in that** the connecting means and connecting counter-means comprise locking means (16) and locking counter-means (18), by means of which the line segments (26, 28) can be locked to one another independently of the position of the control device (32).

10. Coupling arrangement according to one of claims 1 to 9, **characterized in that** the control body (30) comprises an essentially cylindrical outer surface and is guided by an essentially cylindrical inner surface (35, 37) of the housings (8, 10).

11. Coupling arrangement according to one of claims 1 to 10, **characterized in that** the control body (30) comprises an edge (60) in the form of an annular segment, functioning as positive connecting means, which, depending on the position of rotation of the control body (30) forms a positive fit connection with positive connecting counter-means on the housing side.

12. Coupling arrangement according to one of claims 1 to 11, **characterized in that** the control body (30) comprises at one of the part bodies (34, 36) male elements (66) and in each case at the other part body (34, 36) complementary female elements (68), which in the blocked position can be plugged together along an assembly direction (M) and in the flow position produce a positive fit connection along the assembly direction (M).

13. Coupling arrangement according to one of claims 1 to 12, **characterized in that** at least the part bodies (34, 36) are configured as being of the same structural form.

14. Coupling arrangement according to one of claims 1 to 13, **characterized in that** the first unit (2) and/or the second unit (4) are formed by fluid-cooled printed circuit boards.

15. Coupling arrangement according to claim 14, **characterized in that** at least one of the housings (8, 10) can be mounted by means of a plug connection (104) on the printed circuit board concerned.

16. Coupling arrangement according to claim 15, **characterized in that** the plug connection (104) can be produced by a connecting sleeve (106), which can be connected via a first connection (110) to a cooling channel (K1; K2) of the printed circuit board and via a pluggable second connection (115) to one of the line segments (26; 28).

17. Coupling arrangement according to claim 14, **characterized in that** the connecting sleeve (106) comprises an electrically conductive outer side, which is insulated in relation to a fluid channel (116) extending through the connecting sleeve (106).

18. Coupling arrangement according to one of claims 15 to 17, **characterized in that** the plug connection (104) is provided at an edge (124) of the printed circuit board, at which a cooling channel (K1; K2) emerges.

## Revendications

1. Agencement d'accouplement (6) pour raccorder de manière amovible un premier segment de ligne (26) prévu sur une première unité (2) avec un deuxième segment de ligne (28) prévu sur une deuxième unité (4), comprenant des moyens de raccordement pouvant être montés sur la première unité (2), comprenant des moyens conjugués de raccordement pouvant être montés sur la deuxième unité (4) et qui peuvent être fixés aux moyens de raccordement, et comprenant un dispositif d'actionnement (32) qui peut être positionné entre le premier segment de ligne (26) et le deuxième segment de ligne (28) et qui est commutable entre une position de barrage, dans laquelle le raccordement est barré entre le premier segment de ligne (26) et le deuxième segment de ligne (28), et une position d'écoulement, dans laquelle le raccordement est passant entre le premier segment de ligne (26) et le deuxième segment de ligne (28),
le dispositif d'actionnement (32) présentant un corps d'actionnement (30) monté en rotation entre la position de barrage et la position d'écoulement, qui peut être positionné dans un intervalle entre le premier segment de ligne (26) et le deuxième segment de ligne (28) et dans lequel est inséré un segment intermédiaire de ligne (38), par l'intermédiaire duquel le premier segment de ligne (26) est raccordable avec le deuxième segment de ligne (28) et
le corps d'actionnement présentant un premier corps partiel (34), qui est guidé sur un premier boîtier (8) affecté au premier segment de ligne (26) et un deuxième corps partiel (36), qui est guidé sur un deuxième boîtier (10) affecté au deuxième segment de ligne (28), les deux corps partiels (34, 36) pouvant être appliqués l'un sur l'autre,
**caractérisé en ce que** les moyens de raccordement présentent au moins un enfichage électrique (24) indépendant du dispositif d'actionnement, et créé lors du raccordement des deux boîtiers (8, 10).

2. Agencement d'accouplement selon la revendication 1, **caractérisé en ce que** les moyens de raccordement et les moyens conjugués de raccordement présentent sur les boîtiers (8, 10) des fiches électriques mâles (20) et des logements de fiche mâle correspondants (22) pour la création de l'enfichage électrique (24).

3. Agencement d'accouplement selon la revendication 2, **caractérisé en ce que** les fiches mâles (20) et les logements de fiche mâle correspondants (22) sont prévus pour la création appariée de l'enfichage électrique (24) chacun sur les deux boîtiers (8, 10).

4. Agencement d'accouplement selon la revendication 2 ou 3, **caractérisé en ce que** les fiches mâles (20) et les logements de fiche mâle correspondants (22) présentent des mâchoires de contact (50) et des lames de contact (52) sur lesquelles on peut glisser les mâchoires de contact (50).

5. Agencement d'accouplement selon l'une des revendications 1 à 4, **caractérisé en ce qu'**une section transversale intermédiaire (ZQ) du segment intermédiaire de ligne (38) concorde avec une première section transversale (Q1) du premier segment de ligne (26) et une deuxième section transversale (Q2) du deuxième segment de ligne (28).

6. Agencement d'accouplement selon l'une des revendications 1 à 5, **caractérisé en ce que** le segment intermédiaire de ligne (38) est prévu dans un alésage traversant du corps d'actionnement (30).

7. Agencement d'accouplement selon l'une des revendications 1 à 6, **caractérisé en ce que** les moyens de raccordement et les moyens conjugués de raccordement présentent sur le premier corps partiel (34) des moyens de codage (12) qui peuvent s'enficher avec des moyens conjugués de codage (14) du deuxième corps partiel (36).

8. Agencement d'accouplement selon l'une des revendications 1 à 7, **caractérisé en ce que** les moyens de raccordement et les moyens conjugués de raccordement présentent sur le corps d'actionnement (30) des moyens d'assemblage par complémentarité de forme et des moyens d'assemblage conjugués par complémentarité de forme par l'intermédiaire desquels une complémentarité de forme est créée entre les deux segments de ligne (26, 28) dans la position d'écoulement, la complémentarité de forme pouvant être levée dans la position de barrage.

9. Agencement d'accouplement selon l'une des revendications 1 à 8, **caractérisé en ce que** les moyens de raccordement et les moyens conjugués de raccordement présentent des moyens de verrouillage (16) et des moyens de verrouillage conjugués (18), au moyen desquels les segments de lignes (26, 28) sont verrouillables l'un sur l'autre indépendamment de la position du dispositif d'actionnement (32).

10. Agencement d'accouplement selon l'une des revendications 1 à 9, **caractérisé en ce que** le corps d'actionnement (30) présente une surface extérieure sensiblement cylindrique et est guidé par une surface intérieure (35, 37) sensiblement cylindrique des boîtiers (8, 10).

11. Agencement d'accouplement selon l'une des revendications 1 à 10, **caractérisé en ce que** le corps d'actionnement (30) présente un collet (60) en forme de segment d'anneau faisant fonction de moyen d'assemblage par complémentarité de forme, le collet formant avec un moyen d'assemblage conjugué par complémentarité de forme côté boîtier un raccordement par complémentarité de forme en fonction de la position rotative du corps d'actionnement (30).

12. Agencement d'accouplement selon l'une des revendications 1 à 11, **caractérisé en ce que** le corps d'actionnement (30) présente des éléments mâles (66) sur l'un des corps partiels (34, 36) et des éléments femelles complémentaires (68) sur respectivement l'autre corps partiel (34, 36), lesdits éléments étant enfichables ensemble dans la position de barrage selon une direction de montage (M) et réalisant dans la position d'écoulement une complémentarité de forme selon la direction de montage (M).

13. Agencement d'accouplement selon l'une des revendications 1 à 12, **caractérisé en ce qu'au** moins les corps partiels (34, 36) sont configurés constructivement identiques.

14. Agencement d'accouplement selon l'une des revendications 1 à 13, **caractérisé en ce que** la première unité (2) et/ou la deuxième unité (4) sont formées par des plaques de circuit imprimé refroidies par fluide.

15. Agencement d'accouplement selon la revendication 14, **caractérisé en ce qu**'au moins un des boîtiers (8, 10) peut être monté par l'intermédiaire d'une liaison enfichable (104) sur la plaque de circuit imprimé correspondante.

16. Agencement d'accouplement selon la revendication 15, **caractérisé en ce que** la liaison enfichable (104) peut être créée via une douille de raccord (106), qui est raccordable avec un canal de refroidissement (K1 ; K2) de la plaque de circuit imprimé par l'intermédiaire d'un premier raccordement (110) et avec l'un des segments de ligne (26 ; 28) par l'intermédiaire d'un deuxième raccordement (115) enfichable.

17. Agencement d'accouplement selon la revendication 16, **caractérisé en ce que** la douille de raccord (106) présente un côté extérieur conducteur électriquement, qui est isolé d'un canal de fluide (116) s'étendant à travers la douille de raccord (106).

18. Agencement d'accouplement selon l'une des revendications 15 à 17, **caractérisé en ce que** la liaison enfichable (104) est prévue à un bord (124) de la plaque de circuit imprimé, où débouche un canal de refroidissement (K1 ; K2).
